# EUROPEAN PATENT APPLICATION

(11) **EP 4 843 651 A1**
(43) Date of publication of application: **25.11.2026**
(21) Application number: 24918438.3
(22) Date of filing: 26.12.2024
(51) Int. Cl.: B01D 39/16, B01D 39/14, D04H 1/4374, D04H 3/16

(54) **FILTER MEDIUM FOR AIR FILTER, MANUFACTURING METHOD FOR SAME, AND AIR FILTER UNIT USING SAME**

(30) Priority: 17.01.2024 JP 2024005034
(71) Applicant: Toray Industries, Inc., Tokyo 103-8666 (JP)
(72) Inventor: NAKAMURA, Ayu, Otsu-shi, Shiga 520-8558 (JP); HAMADA, Tsuyoshi, Otsu-shi, Shiga 520-8558 (JP); AIBA, Ryota, Otsu-shi, Shiga 520-8558 (JP)
(74) Representative: Hoefer & Partner Patentanwälte mbB
(86) International application number: PCT/JP2024/046091
(87) International publication number: WO 2025/154527

(57) **Abstract**

Provided is a high-performance filter medium that can ameliorate the problem that the dust holding capacity and cigarette smoke durability of a nanofiber are low, and has both a high initial collection efficiency of an electret melt-blown fabric and maintenance of the efficiency after static elimination of a nanofiber. A filter medium for an air filter includes at least a first layer, a second layer, and a third layer in this order from an upstream side, in which the second layer is an electret melt-blown non-woven fabric, the third layer is a nanofiber layer having an average fiber diameter of 10 to 1000 nm, and a basis weight of the third layer is 0.1 g/m² or more.

## Description

### TECHNICAL FIELD

The present invention relates to a filter medium for an air filter suitably used for an air filter application, a manufacturing method for the same, and an air filter unit using the same.

### BACKGROUND ART

In recent years, in applications of air purifiers and filters for automobile air conditioners (cabin filters) in the air filter market, the international standard ISO 16890-2016 for general ventilation filters has been revised so that the performance notation reflects the collection efficiency after the static elimination treatment, and the dust collection performance after the static elimination tends to be more emphasized.

Conventionally, an electret filter obtained by subjecting a non-woven fabric of synthetic fibers such as polypropylene to electret treatment has been known as a filter medium for air filters used for applications such as air purification (Patent Documents 1 and 2). However, as for the electret filter, there has been the problem that electret properties are weakened by oil mist or moisture in the air at the time of long-term use, and collection performance deteriorates.

Therefore, in order to improve the dust collection performance after the static elimination of the air filter, a non-woven fabric using a nanofiber, which is an ultrafine fiber, having a fiber diameter of 1000 nm or less has been proposed (Patent Documents 3 and 4). However, such a non-woven fabric exhibits high collection efficiency without depending on the electret properties, but has the problem of being easily clogged and having a short life.

### PRIOR ART DOCUMENTS

### PATENT DOCUMENTS

Patent Document 1: Japanese Patent Laid-open Publication No. 2014-64969
Patent Document 2: Japanese Patent Laid-open Publication No. 2021-147711
Patent Document 3: Japanese Patent Laid-open Publication No. 2018-202295
Patent Document 4: Japanese Patent Laid-open Publication No. 2015-140495

### SUMMARY OF THE INVENTION

### PROBLEMS TO BE SOLVED BY THE INVENTION

As an index of the life of the air filter, there is a dust holding capacity that is determined by loading dust until a specified pressure is reached and measuring the dust weight at that time. The larger the amount of retained dust, it is judged that the filter life is longer and the performance is higher. However, the nanofiber applied to the filter medium of the present invention has a small fiber diameter, so that the inter-fiber distance is reduced and the pore size as the filter medium is reduced. Therefore, there has been the problem that dust easily accumulates on the surface of a nanofiber layer, the pressure drop rapidly increases, and the dust holding capacity decreases. In addition, as an index of the life of a filter for an air purifier, there is a cigarette smoke load test for measuring performance when cigarette smoke particles are loaded on an air filter. As a result of the cigarette smoke load test, it has been found that in the nanofiber having a small fiber diameter, cigarette smoke particles are attached and collected in a spherical shape around the fiber. In particular, it has been found that when the basis weight is large and the inter-fiber distance is small, fibers to which cigarette smoke particles are attached in a spherical shape overlap with each other to form a film, and the pressure drop is greatly increased. In addition, it has been confirmed that a plurality of holes of 100 µm or more are observed in the film, and the flow of particles is concentrated in the holes, so that the collection efficiency is reduced, and it has been found that a nanofiber has a problem of low cigarette smoke durability.

An object of the present invention is to provide a filter medium for an air filter that maintains high collection efficiency both before and after static elimination while ameliorating the problem that the dust holding capacity and cigarette smoke durability of a nanofiber are low.

### SOLUTIONS TO THE PROBLEMS

To solve the problem described above, the present invention and preferred aspects thereof have the following configurations.
(1) A filter medium for an air filter including at least a first layer, a second layer, and a third layer in this order from an upstream side, in which the second layer is an electret melt-blown non-woven fabric, the third layer is a nanofiber layer having an average fiber diameter of 10 to 1000 nm, and a basis weight of the third layer is 0.1 g/m² or more.
(2) The filter medium for an air filter according to (1), in which a constituent fiber of the electret melt-blown non-woven fabric of the second layer has an average fiber diameter of 0.5 to 50 µm.
(3) The filter medium for an air filter according to (1) or (2), in which a constituent fiber of the first layer has an average fiber diameter of 10 to 150 µm, and an initial collection efficiency Ian of an n-th layer measured using neutralized NaCl particles having a particle size of 0.3 to 0.5 µm at an air speed of 3.2 m/min satisfies relationships below: $Ia 1 < Ia 2$ $Ia 1 < Ia 3 .$
(4) The filter medium for an air filter according to any one of (1) to (3), in which an initial collection efficiency Ian of an n-th layer measured using neutralized NaCl particles having a particle size of 0.3 to 0.5 µm at an air speed of 3.2 m/min satisfies relationships below: $Ia 1 / Ia 2 \leq 0.20$ $Ia 2 / Ia 3 \geq 1.00 .$
(5) The filter medium for an air filter according to any one of (1) to (4), in which an initial quality factor (QF) QFan of an n-th layer measured using neutralized NaCl particles having a particle size of 0.3 to 0.5 µm at an air speed of 3.2 m/min and calculated from Formula (1) below satisfies relationships below: $QFa 1 / QFa 2 \leq 0.1$ $QFa 2 / QFa 3 \geq 1.0$ $QF = - Ln \left(1-I/100\right) / P$ (1) where in Formula (1), I represents a collection efficiency (%), and P represents a pressure drop (Pa).
(6) The filter medium for an air filter according to any one of (1) to (5), in which an initial collection efficiency IA (%) measured using neutralized NaCl particles having a particle size of 0.03 µm at an air speed of 3.2 m/min, an initial collection efficiency IB (%) measured using neutralized NaCl particles having a particle size of 0.1 µm at an air speed of 3.2 m/min, and an initial collection efficiency IC (%) measured using neutralized NaCl particles having a particle size of 0.3 µm at an air speed of 3.2 m/min satisfy relationships below: $0.01 \leq \left(100-IB\right) / \left(100-IA\right) \leq 0.8$ $0.001 \leq \left(100-IC\right) / \left(100-IA\right) \leq 0.3 .$
(7) The filter medium for an air filter according to any one of (1) to (6), in which an initial quality factor (QF) QFa of the filter medium for an air filter measured using neutralized NaCl particles having a particle size of 0.3 to 0.5 µm at an air speed of 3.2 m/min and calculated from Formula (1) below satisfies relationships below: $QFa \geq 0.07$ $QF = - Ln \left(1-I/100\right) / P$ (1) where in Formula (1), I represents a collection efficiency (%), and P represents a pressure drop (Pa).
(8) The filter medium for an air filter according to any one of (1) to (7), in which an initial quality factor (QF) QFa3 of the third layer measured using neutralized NaCl particles having a particle size of 0.3 to 0.5 µm at an air speed of 3.2 m/min and calculated from Formula (1) below satisfies relationships below: $QFa 3 \geq 0.05$ $QF = - Ln \left(1-I/100\right) / P$ (1) where in Formula (1), I represents a collection efficiency (%), and P represents a pressure drop (Pa).
(9) The filter medium for an air filter according to any one of (1) to (8), in which an initial quality factor (QF) QFa of the filter medium for an air filter, a quality factor (QF) QFaD2 after static elimination of the second layer, a quality factor (QF) QFaD3 after static elimination of the third layer, and a quality factor (QF) QFaDall after static elimination of the entire filter medium for an air filter measured using neutralized NaCl particles having a particle size of 0.3 to 0.5 µm at an air speed of 3.2 m/min and calculated from Formula (1) below satisfy relationships below: $QFaD 2 / QFa < 0.20$ $QFaD 3 / QFa > 0.20$ $0.10 \leq QFaDall / QFa \leq 1.00$ $QF = - Ln \left(1-I/100\right) / P$ (1) where in Formula (1), I represents a collection efficiency (%), and P represents a pressure drop (Pa).
(10) The filter medium for an air filter according to any one of (1) to (9), in which a most penetrating particle size (MPPS) Mn (µm) of a collection efficiency of an n-th layer measured using neutralized NaCl particles having a particle size of 0.015 to 0.300 µm at an air speed of 3.2 m/min satisfies relationships below: $M 2 < 0.05$ $M 3 > 0.05 .$
(11) The filter medium for an air filter according to any one of (1) to (10), including an adsorbent layer between the first layer and the second layer and/or between the second layer and the third layer.
(12) The filter medium for an air filter according to any one of (1) to (11), in which the first layer has an air permeability of 100 to 600 cm³/cm²·sec.
(13) The filter medium for an air filter according to any one of (1) to (12), including a fourth layer formed of a fiber having an average fiber diameter of 0.5 to 150 µm on a downstream side of the third layer.
(14) A manufacturing method for the filter medium for an air filter according to any one of (1) to (12), the method including: bonding the first layer and the second layer; and then laminating the third layer on a surface on a second layer side to form the filter medium for an air filter including non-woven fabric layers of the first layer, the second layer, and the third layer.
(15) A manufacturing method for the filter medium for an air filter according to (13), the method including: laminating the third layer on the fourth layer; bonding the first layer and the second layer; and then bonding a surface of the second layer and a surface of the third layer.
(16) A manufacturing method for the filter medium for an air filter according to (13), the method including: bonding the first layer and the second layer; then laminating the third layer on a surface of the second layer; and laminating the fourth layer on a surface of the third layer.
(17) An air filter unit including the filter medium for an air filter according to any one of (1) to (13).

### EFFECTS OF THE INVENTION

With the present invention, it is possible to obtain a high-performance filter medium that can ameliorate the problem that the dust holding capacity and cigarette smoke durability of a nanofiber are low, and has both a high initial collection efficiency of an electret melt-blown fabric and maintenance of the efficiency after static elimination of a nanofiber.

### BRIEF DESCRIPTION OF THE DRAWING

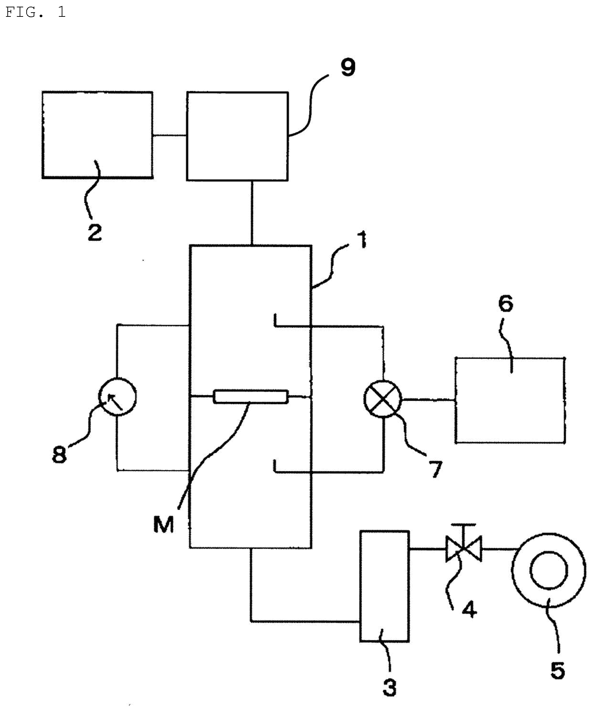

Fig. 1 is a schematic view of a collection efficiency measuring apparatus.

### EMBODIMENTS OF THE INVENTION

Hereinafter, the present invention will be described in detail.

A filter medium for an air filter of the present invention includes at least a first layer, a second layer, and a third layer in this order from an upstream side, in which the second layer is an electret melt-blown non-woven fabric, the third layer is a nanofiber layer having an average fiber diameter of 10 to 1000 nm, and a basis weight of the third layer is 0.1 g/m² or more. The effect of the present invention is considered to be achieved by laminating the layers having the following performance.

### (First layer)

The form of the first layer is not particularly limited, and may be a thermally bonded non-woven fabric, a chemical bond non-woven fabric, a needle punched non-woven fabric, or the like, but a chemical bond non-woven fabric is preferable from the viewpoint of the thickness of the filter medium and the pleatability.

The average fiber diameter of the constituent fiber of the first layer is preferably 10 to 150 µm, more preferably 10 to 120 µm, still more preferably 10 to 80 µm. Since a non-woven fabric having a larger fiber diameter and higher strength than those of the second layer to the fourth layer is laminated as the first layer, the product suitably plays a role as an aggregate of a filter medium, and it is easy to form a space for holding coarse dust.

In addition, it is preferable that the first layer has an air permeability of 100 to 600cm³/cm²·sec. In the non-woven fabric having a large air permeability of 100 cm³/cm²·sec or more, more preferably 120 cm³/cm²·sec or more and having a large pore volume, clogging hardly occurs in a state where the dust adhesion amount is small, and the life can be more effectively extended. On the other hand, when the air permeability is 600 cm³/cm²·sec or less, more preferably 500 cm³/cm²·sec or less, the dust collection performance is further enhanced.

### (Second layer)

The average fiber diameter of the electret melt-blown non-woven fabric of the second layer is preferably 0.5 to 50 µm, more preferably 1 to 30 µm, still more preferably 1 to 10 µm. When the average fiber diameter becomes fine, a sufficient collection efficiency can be obtained, but at the same time, the pressure drop increases, so that the average fiber diameter is preferably within the above range. The electret treatment makes it possible to collect fine dust of submicron size or nano size, which is difficult to remove normally, by electrostatic force.

The raw material constituting the electret melt-blown non-woven fabric is a spinnable thermoplastic resin, and examples thereof include materials having high electric resistivity, such as polyolefin resins including polypropylene, polyethylene, polystyrene, polybutylene terephthalate, and polytetrafluoroethylene, aromatic polyester resins including polyethylene terephthalate, and polycarbonate resins. Polyolefin resins are preferably used from the viewpoint of spinnability, and polypropylene is particularly suitable. The electret treatment method can be arbitrarily selected from known methods such as a corona discharge method, a fluid contact method, and a triboelectrification method. Among fluid contact methods, what is called a hydrocharging method is particularly preferable, in which pure water is sprayed onto a non-woven fabric, or an electret is formed by being brought into contact with a water flow in a water tank. As a polar solvent used at this time, pure water is preferably used from the viewpoint of productivity such as drainage.

### (Third layer)

The third layer is a nanofiber layer having an average fiber diameter of 10 to 1000 nm. When the average fiber diameter is 1000 nm or less, preferably 800 nm or less, more preferably 500 nm or less, it is possible to reduce the pressure drop by the slip flow effect. When the average fiber diameter is 10 nm or more, preferably 20 nm or more, more preferably 30 nm or more, an appropriate pore size can be secured, and excessive increase in pressure drop and clogging can be avoided.

A resin that forms the fiber of the nanofiber layer is not particularly limited, and for example, polymer materials such as polyvinyl alcohol, polyethylene glycol, polyethylene oxide, polyvinylpyrrolidone, polyethylene, polypropylene, polyethylene terephthalate, polylactic acid, polyamides, polyurethane, polystyrene, polysulfones, polyethersulfone, polyvinylidene fluoride, polyacrylonitrile, polymethyl methacrylate, polyglycolic acid, polycaprolactone, polyvinyl acetate, polycarbonates, polyimides, polyetherimide, cellulose, cellulose derivatives, chitin, chitosan, collagen, gelatin, and copolymers thereof can be used.

The basis weight of the third layer is 0.1 g/m² or more. By setting the basis weight of the third layer to 0.1 g/m² or more, the mechanical collection efficiency is increased, leading to improvement of the collection efficiency after static elimination. In addition, by setting the basis weight of the third layer to preferably 5.0 g/m² or less, more preferably 2.0 g/m² or less, it is possible to more effectively suppress an increase in pressure drop and a decrease in life due to clogging with dust.

Since a low pressure drop and a high collection efficiency can be realized by using the nanofiber having the above average fiber diameter, as the performance of the third layer, it is preferable that an initial quality factor (QF) QFa3 of the third layer measured using neutralized NaCl particles of 0.3 to 0.5 µm at an air speed of 3.2 m/min and calculated by Formula (1) below satisfies the following relationship. $QFa 3 \geq 0.05$

The initial quality factor (QF) QFa3 is more preferably 0.06 or more, still more preferably 0.07 or more.

The quality factor (QF) is an index of collection performance of the filter medium for an air filter and indicates a relationship between the collection efficiency I (%) and the pressure drop P (Pa) as expressed by Formula (1) below, and a higher quality factor (QF) indicates that the collection efficiency is higher and the pressure drop is lower. $QF = - Ln \left(1-I/100\right) / P$ (1)

In addition, the collection efficiency I (%) required to calculate the quality factor (QF) can be calculated from the number of particles D on the upstream side of a sample and the number of particles d on the downstream side of the sample when a certain number of particles are caused to flow through the measurement sample at a specified air volume, using the calculation formula of Formula (2) below. $Collection efficiency I \left(%\right) = \left[1-\left(d/D\right)\right] \times 100$ (2)

### (Fourth layer)

It is also preferable that the filter medium for an air filter of the present invention include a fourth layer formed of a fiber having an average fiber diameter of 0.5 to 150 µm on the downstream side of the third layer. The average fiber diameter of the fiber forming the fourth layer is preferably 5 to 40 µm, more preferably 10 to 40 µm. Examples of the aspect of the fourth layer include, but are not particularly limited to, a thermally bonded non-woven fabric, a chemical bond non-woven fabric, a melt-blown non-woven fabric, a needle punched non-woven fabric, a cellulose nano-non-woven fabric, a fiber sheet containing a thermally adhesive fiber, and the like, but a spunbond non-woven fabric, which is excellent in processability, has low airflow resistance, protects the third layer, and suppresses breakage and restitution during pleating, is more preferable.

### (Adsorbent layer)

The filter medium for an air filter of the present invention preferably includes an adsorbent layer between the first layer and the second layer and/or between the second layer and the third layer. The presence of the adsorbent layer makes it possible to encapsulate an odorous organic low molecular weight compound such as ammonia and toluene without releasing the compound from the filter medium, thereby allowing a further improvement in air cleaning performance. Common examples of the adsorbent include activated alumina, activated carbon, activated carbon fibers, silica gel, and zeolite, and the adsorbent is more preferably activated carbon from the viewpoint of an odorant adsorption effect.

### (Layered structure)

In the filter medium for an air filter of the present invention, an initial collection efficiency Ian of an n-th layer measured using neutralized NaCl particles of 0.3 to 0.5 µm at an air speed of 3.2 m/min preferably satisfies relationships below: $Ia 1 / Ia 2 \leq 0.20$ $Ia 2 / Ia 3 \geq 1.00$

The ratio Ia1/Ia2 is more preferably 0.15 or less, still more preferably 0.10 or less, still more preferably 0.07 or less, still more preferably 0.05 or less. The ratio Ia2/Ia3 is more preferably 1.05 or more, still more preferably 1.10 or more, still more preferably 1.15 or more. That is, it is preferable to adopt a structure in which the collection efficiency of the second layer is the highest among the layer configurations of the first layer/the second layer/the third layer.

Since the average fiber diameter of the nanofiber of the third layer is as thin as 10 to 1000 nm, the pore size is small, the mechanical collection mechanism including blocking, inertia, gravity, and diffusion is increased, and a constant collection efficiency is maintained regardless of the presence or absence of electrification. On the other hand, it has been found that when the basis weight is increased in order to improve performance, the pore size becomes too small, dust easily accumulates on the surface, the pressure drop rapidly increases, and the dust holding capacity tends to decrease. In addition, it has been found that since the fiber diameter is extremely small, the fiber tends to be affected by cigarette smoke particles, the form of the fiber tends to change, and the performance tends to deteriorate.

Therefore, in order for the initial collection efficiency Ian to satisfy the above relationships, a higher performance electret melt-blown non-woven fabric capable of achieving a low pressure drop and a high collection efficiency by electrostatic force is placed as the second layer on the upstream layer of the nanofiber to form a sparse/dense structure, so that the electret melt-blown non-woven fabric collects dust that causes clogging of the nanofiber, thereby making it possible to more effectively suppress a rapid increase in pressure drop. In addition, the electret melt-blown non-woven fabric having a fiber diameter larger than that of the nanofiber and hardly affected by cigarette smoke absorbs cigarette dust in the upstream layer of the nanofiber, thereby making it possible to more effectively suppress performance deterioration of the nanofiber and more effectively achieve a long life as a filter medium.

An initial quality factor (QF) QFan of the n-th layer measured using neutralized NaCl particles having a particle size of 0.3 to 0.5 µm at an air speed of 3.2 m/min and calculated from Formula (1) above preferably satisfies relationships below: $QFa 1 / QFa 2 \leq 0.1$ $QFa 2 / QFa 3 \geq 1.0$

The ratio QFa1/QFa2 is more preferably 0.07 or less, still more preferably 0.05 or less, and the ratio QFa2/QFa3 is more preferably 1.5 or more, still more preferably 2.0. That is, it is preferable to adopt a structure in which the second layer shows the highest quality factor (QF) among the layer configurations of the first layer/the second layer/the third layer.

### (Filter medium performance)

The filter medium for an air filter of the present invention preferably has the following performance.

Since the first layer serves as a reinforcing layer of the air filter and plays a role in collecting a large amount of large dust on the most upstream side, it is preferable to adjust both the fiber diameter and the pore size to be relatively large. The first layer therefore preferably shows lower collection performance than that of the second layer and the third layer, and the initial collection efficiency Ian of the n-th layer measured using neutralized NaCl particles having a particle size of 0.3 to 0.5 µm at an air speed of 3.2 m/min preferably satisfies relationships below: $Ia 1 < Ia 2$ $Ia 1 < Ia 3$

In addition, it is more preferable that the initial collection efficiency Ian satisfy the relationship below: $Ia 1 < Ia 3 < Ia 2 .$

In the filter medium for an air filter of the present invention, an initial quality factor (QF) QFa of the filter medium for an air filter measured using neutralized NaCl particles of 0.3 to 0.5 µm at an air speed of 3.2 m/min and calculated from Formula (1) above preferably satisfies a relationship below: $QFa \geq 0.07$

The initial quality factor (QF) QFa is more preferably 0.09 or more, still more preferably 0.12 or more. This can be achieved by the layered structure of the present invention in which the electret melt-blown layer exhibiting a high initial collection efficiency with a low pressure drop is provided as the second layer, so that the basis weight of the nanofiber in the third layer is kept at the minimum amount required to achieve the target collection efficiency after static elimination, and the increase in pressure drop is suppressed.

The electret melt-blown non-woven fabric of the second layer in the filter medium for an air filter of the present invention can collect fine dust by electrostatic force and has a high initial collection efficiency, but the electrostatic force decreases due to oil mist or moisture in the air during long-term use, and the collection performance tends to deteriorate. On the other hand, since the average fiber diameter of the nanofiber of the third layer is as thin as 10 to 1000 nm, the pore size is small, the mechanical collection mechanism is increased, and the collection efficiency is maintained regardless of the presence or absence of electrification. The filter medium for an air filter of the present invention enables performance having both a high initial collection efficiency of an electret melt-blown fabric and maintenance of the collection efficiency after static elimination of the nanofiber.

That is, in the filter medium for an air filter of the present invention, the initial quality factor (QF) QFa of the filter medium for an air filter, a quality factor (QF) QFaD2 after static elimination of the second layer, a quality factor (QF) QFaD3 after static elimination of the third layer, and a quality factor (QF) QFaDall after static elimination of the entire filter medium for an air filter measured using neutralized NaCl particles having a particle size of 0.3 to 0.5 µm at an air speed of 3.2 m/min and calculated from Formula (1) above preferably satisfy relationships below: $QFaD 2 / QFa < 0.20$ $QFaD 3 / QFa > 0.20 .$

As shown above, it is preferable that the quality factor (QF) QFaDn after static elimination show a higher result in the third layer than in the second layer, and Fall in the entire filter medium in the entire filter medium in which the third layer and the second layer are laminated satisfies: $0.10 \leq QFaDall / QFa \leq 1.00 .$

The ratio QFaD2/QFa is more preferably less than 0.15, still more preferably less than 0.10. The ratio QFaD3/QFa is more preferably more than 0.30, still more preferably more than 0.40. The ratio QFaDall/QFa is more preferably 0.13 or more, still more preferably 0.15 or more. The ratio QFaDall/QFa is more preferably 0.80 or less, still more preferably 0.60 or less.

The collection efficiency of the electret melt-blown non-woven fabric tends to decrease as the particle size becomes smaller than 0.1 µm, and the collection efficiency of the nanofiber tends to increase as the particle size becomes smaller than 0.1 µm. There is a particle size (most penetrating particle size) that is most difficult to collect with a filter medium for an air filter when the filtration speed is constant. In the filter medium for an air filter of the present invention, the most penetrating particle size (MPPS) Mn (µm) of the collection efficiency of the n-th layer measured using neutralized NaCl having a particle size of 0.015 to 0.300 µm at an air speed of 3.2 m/min preferably satisfies relationships below: $M 2 < 0.05$ $M 3 > 0.05$

M2 is more preferably less than 0.03 µm, and M3 is more preferably more than 0.07 µm.

In the filter medium for an air filter of the present invention, an initial collection efficiency IA (%) measured using neutralized NaCl particles having a particle size of 0.03 µm at an air speed of 3.2 m/min, an initial collection efficiency IB (%) measured using neutralized NaCl particles having a particle size of 0.1 µm at an air speed of 3.2 m/min, and an initial collection efficiency IC (%) measured using neutralized NaCl particles having a particle size of 0.3 µm at an air speed of 3.2 m/min preferably satisfy relationships below: $0.01 \leq \left(100-IB\right) / \left(100-IA\right) \leq 0.8$ $0.001 \leq \left(100-IC\right) / \left(100-IA\right) \leq 0.3$

The ratio (100 - IB)/(100 - IA) is more preferably 0.1 or more, and the ratio (100 - IC)/(100 - IA) is more preferably 0.1 or more.

### (Manufacturing method)

As a method for laminating the filter medium for an air filter of the present invention, a commonly used method such as a hot-melt powder method, an ultrasonic embossing adhesion method, and a spray lamination method can be used.

In addition, although not particularly limited, since the nanofiber layer of the third layer is very thin and lacks stability as the layer itself, when the filter medium for an air filter including non-woven fabric layers of the first layer, the second layer, and the third layer is formed, it is preferable that the third layer be laminated on the second layer, and it is more preferable that the nanofiber of the third layer be laminated on the surface on the second layer side after the first layer and the second layer are bonded.

As a method for producing the nanofiber, a known method can be used. Examples thereof include electrospinning (electrostatic spinning), a melt-blowing method, a sea-island melt spinning method, and a carbon dioxide laser supersonic drawing method, and electrospinning (electrostatic spinning) capable of mass production in a large width is more preferable.

When the filter medium for an air filter including non-woven fabric layers of the first layer, the second layer, the third layer, and the fourth layer is formed, the nanofiber layer of the third layer is preferably formed on the fourth layer, and particularly, it is preferable that the third layer be laminated on the fourth layer, the first layer and the second layer be bonded to each other, and then the surface of the second layer and the surface of the third layer be bonded to each other.

As another method for forming the filter medium for an air filter including non-woven fabric layers of the first layer, the second layer, the third layer, and the fourth layer, a method of bonding the first layer and the second layer, then laminating the nanofiber of the third layer on the surface of the second layer, and laminating the fourth layer on the surface of the third layer is also preferable.

In addition, in the two-step bonding method described above, the first layer and the second layer need to be hot-pressed twice, and there is a possibility that wrinkles are formed due to differences in thermal shrinkage rate between the layers. Therefore, as another method for forming the filter medium for an air filter including non-woven fabric layers of the first layer, the second layer, the third layer, and the fourth layer, a method of laminating the third layer on the surface of the fourth layer and bonding the first layer, the second layer, and the laminate of the third layer and the fourth layer at a time is also preferable.

In addition, an air filter unit of the present invention uses the filter medium for an air filter of the present invention, and is suitably used for air filter applications, particularly as filters for air purifiers and cabin filters for automobiles, and thus, the air filter unit can be processed into shapes such as a pleated shape and then suitably used as a filter unit.

### EXAMPLES

Hereinafter, the present invention will be described more specifically with reference to examples, but the present invention is not necessarily limited to these aspects. Each measurement item in the examples was measured by the following method.

### [Measuring method and processing method]

### (1) Average fiber diameter

From a surface measuring 1000 mm × 1000 mm of each layer, 20 sample collection locations were randomly selected, one measurement sample of 3 mm in length × 3 mm in width was collected per sample collection location, one surface photograph of the non-woven fabric was taken with a scanning electron microscope (VHX-6000/D500/D510 manufactured by KEYENCE CORPORATION, magnification: 1000 times) for each measurement sample, that is, 20 photographs in total were taken, and the fiber diameter was measured for all the fibers in the photograph. Then, the arithmetic average value was calculated.

### (2) Basis weight

The mass of an evaluation sample (non-woven fabric, electrical withstanding treated non-woven fabric, or filter medium) was determined and converted into the mass per 1 m² using the area thereof to determine the basis weight of each evaluation sample. The minimum sampling area was adjusted to 0.01 m² or more. For the nanofiber layer, a nanofiber layer was formed on a spunbond non-woven fabric SB having a known basis weight described later, the basis weight of the entire SB on which the nanofiber layer was formed was measured, and the basis weight of SB was subtracted from the measured basis weight to calculate the basis weight of the nanofiber layer.

### (3) Air permeability

The evaluation was performed according to the evaluation method of the Frazier type method described in JIS L 1096 (1999). However, when the measurement was performed with one sheet, the measurement results were likely to vary, and therefore the measurement was performed with two sheets stacked. The number of evaluation N was set to at least 5 or more, and the arithmetic average was taken as the air permeability in the present invention.

### (4) Collection efficiency for neutralized NaCl particles of 0.3 to 0.5 µm

Measurement samples measuring 150 mm × 150 mm were taken, and the collection efficiency of each sample was measured using the collection efficiency measuring apparatus illustrated in Fig. 1. In this collection efficiency measuring apparatus illustrated in Fig. 1, a dust storage box 2 and a static eliminator 9 are connected to the upstream side of a sample holder 1 in which a measurement sample M is set, and a flow meter 3, a flow adjusting valve 4, and a blower 5 are connected to the downstream side. The sample holder 1 is equipped with a particle counter 6, and the number of dust particles can be counted at each of the upstream and downstream sides of the measurement sample M by operating a switching cock 7. The sample holder 1 is also equipped with a pressure gauge 8, which can indicate the static pressure difference between the upstream side and the downstream side of the measurement sample M.

In the measurement of the collection efficiency, a NaCl solution was filled in the dust storage box 2. Next, the measurement sample M was placed in the sample holder 1. The air volume was adjusted with the flow adjusting valve 4 such that the air passed through the filter at a speed of 3.2 m/min. The dust concentration was stabilized within the range of 10,000 to 30,000 particles/2.83 × 10⁻⁴ m³ (0.01 ft³). The number of dust particles (D) on the upstream side and the number of dust particles (d) on the downstream side of the measurement sample M were measured using the particle counter 6 (KC-01D manufactured by RION Co., Ltd.). The measurement was repeated three times for each sample. The collection efficiency (%) for 0.3-µm neutralized NaCl particles was calculated using the following formula based on JIS K 0901 (1991) "Form, size and performance testing methods of filtration media for collecting airborne particulate matters". The average value for the three measurement samples was taken as a final collection efficiency (Ia). $Collection efficiency \left(%\right) = \left[1-\left(d/D\right)\right] \times 100$

In the formula, d is the total number of downstream dust of three measurements, and D is the total number of upstream dust of three measurements.

As the non-woven fabric collects more dust, the number of downstream dust is smaller and thus the collection efficiency value is higher. For the nanofiber layer, a nanofiber layer was formed on a spunbond non-woven fabric SB having a collection efficiency of about 1% described later, and the collection efficiency of the entire SB on which the nanofiber layer was formed was measured.

### (5) Pressure drop

The pressure drop was determined by reading the static pressure difference between the upstream side and the downstream side of the measurement sample M with the pressure gauge 8 during the measurement of the collection efficiency in Section (4). The average value for the five measurement samples was taken as the final pressure drop. For the nanofiber layer, a nanofiber layer was formed on a spunbond non-woven fabric SB having a pressure drop of about 1 Pa described later, and the pressure drop of the entire SB on which the nanofiber layer was formed was measured.

### (6) Quality factor (QF)

The quality factor (QF) (QFa) was calculated from Formula (1) below where I (%) is the collection efficiency according to Section (4) above and P (Pa) is the pressure drop according to Section (5) above. $QF = - Ln \left(1-I/100\right) / P$ (1).

### (7) Collection efficiency for neutralized NaCl particles having particle size of 0.015 to 0.300 µm, and most penetrating particle size (MPPS)

NaCl particles generated with an atomizer in accordance with the method described in Annex 5 (Definition) of JIS B 9928, "Method for Generating NaCl Aerosol (Pressurized Spray Method)", were classified into specified particle sizes with an electrostatic classifier (manufactured by TSI Incorporated), particle electrification was neutralized using americium-241, then the flow rate of permeation was adjusted to 3.2 m/min, the numbers of particles before and after the filter medium as a measurement sample were determined using a particle counter (CNC manufactured by TSI Incorporated), and the collection efficiency was measured. For the nanofiber layer, a nanofiber layer was formed on a spunbond non-woven fabric SB having a collection efficiency of about 1% described later, and the collection efficiency of the entire SB on which the nanofiber layer was formed was measured.

The collection efficiency by particle size in the particle size range of 0.015 to 0.300 µm was measured, and the particle size at which the collection efficiency was low as a result of permeation of the largest number of particles was defined as the most penetrating particle size (MPPS) Mn.

### (8) Static elimination method

A filter medium was put into a sealed bag, the bag was filled with isopropyl alcohol (IPA) vapor, so that the filter medium was exposed to IPA vapor at normal temperature for 48 hours. Thereafter, the sample was taken out from the bag and dried at normal temperature for 24 hours to provide a filter medium subjected to static elimination.

### (9) Dust holding performance evaluation method

A planar filter medium was set in a holder having an effective opening area of 0.1 m², air was allowed to pass through the filter medium in the vertical direction at a surface air velocity of 20.0 m/min, a pressure difference between upstream and downstream flows of the filter when Type 15 JIS test powder (Japan Air Cleaning Association) was supplied at a concentration of 70 mg/m³ from the upstream side was measured with a differential pressure gauge, and a dust holding capacity was measured on the basis of the change in filter mass until the pressure drop increased by 150 Pa from an initial pressure drop. This measurement was made on five samples arbitrarily taken out of one specimen, and the average value thereof was used.

### (10) Test method for cigarette smoke durability

In a 1 m³ acrylic container, in accordance with the JEMA standard (JEM 1467 method), one "MEVIUS ORIGINAL" tar 10 mg cigarette manufactured by Japan Tobacco Inc. (manufactured by Japan Tobacco Inc.) was placed in a cigarette smoke suction machine and burned. Air was passed through an evaluation sample attached to an adapter having an effective ventilation diameter of 135 mm in the same container at an air volume of 1.3 m³/min for 1 hour, and then the collection efficiency and the pressure drop of the evaluation sample were measured. This operation was then repeated five times for the same evaluation sample.

### (11) Pleatability

Pleating was continuously performed to form 400 pleat peaks with a reciprocating pleating machine under the conditions of a pleat peak height of 25 mm, a pleating speed of 40 pleat peaks/minute, and a back pressure of 0.1 MPa. For the filter medium for an air filter after pleating, the shape and pitch of the pleat peaks at the time of release from the pleating machine were observed, and the pleatability was ranked in the following three stages, and "A" was regarded as acceptable.
A: The peak shape and pitch of the pleat peaks are stable.
B: Although the pleat shape can be formed, the shape of the pleat peak and the pitch are disordered.
C: A pleated shape cannot be formed.

### [Non-woven fabric or manufacture thereof]

### (1) Chemical bond non-woven fabric CB

A chemical bond non-woven fabric CB having a basis weight of 40.0 g/m² and including 16.5 mass% of a polyvinyl alcohol (PVA) fiber (vinylon) having a single fiber fineness of 1.5 dtex, 22 mass% of a polyvinyl alcohol (PVA) fiber (vinylon) having a single fiber fineness of 7.1 dtex, 16.5 mass% of a polyethylene terephthalate (PET) fiber having a single fiber fineness of 2.0 dtex, and 45 mass% of a phosphorus-based flame retardant-containing acrylic resin binder was used.

### (2) Electret melt-blown non-woven fabric EMB1

With the use of a polypropylene resin (PP), a non-woven fabric of 4.5 µm in average fiber diameter and 18.0 g/m² in basis weight was obtained by a melt-blowing method. Then, while running the obtained non-woven fabric along the surface of water in a water tank that was supplied with pure water, a slit-shaped suction nozzle was brought into contact with the surface of the non-woven fabric to suck the water, thereby causing the water to permeate the whole fiber layer, and after draining the water, the fiber layer was naturally dried, thereby providing an electret melt-blown non-woven fabric EMB1.

### (3) Electret melt-blown non-woven fabric EMB2

An electret melt-blown non-woven fabric EMB2 was obtained using a polypropylene resin (PP) in the same manner as in the manufacture of EMB1 except that the manufacturing conditions were changed so that the average fiber diameter was 2.8 µm and the basis weight was 20.0 g/m² by a melt-blowing method.

### (4) Nanofiber layer NF1

Polyvinylidene fluoride (PVDF) having a degree of polymerization of 500 was dissolved in hot water to prepare a 25-mass% aqueous polyvinylidene fluoride solution. Using this aqueous solution as a spinning solution, a polyvinylidene fluoride nanofiber was spun onto a base material by an electrospinning method so that the basis weight was 0.4 g/m², and the product was dried in a drying furnace at 120°C to provide a nanofiber layer NF1.

### (5) Nanofiber layer NF2

A nanofiber layer NF2 was obtained using polyvinylidene fluoride (PVDF) in the same manner as in the manufacture of the nanofiber layer NF1 except that the manufacturing conditions were changed so that the basis weight was 0.6 g/m² by an electrospinning method. The basis weight of the nanofiber layer was adjusted by changing the running speed of the base material receiving the nanofiber.

### (6) Spunbond non-woven fabric SB

A polypropylene resin (PP) composed of a homopolymer having an MFR of 200 g/10 minute was melted using an extruder and spun from a rectangular nozzle having a pore diameter of 0.30 mm and a pore depth of 2 mm at a spinning temperature of 235°C and a single-hole discharge rate of 0.32 g/min to obtain yarns, and the yarns were cooled and solidified, then towed and drawn by compressed air at an ejector pressure of 0.35 MPa using a rectangular ejector, and collected on a collection net. The obtained non-woven fiber web was temporarily thermally bonded at a temperature of 120°C using a flat roll to provide a spunbond non-woven fabric SB having a basis weight of 15.0 g/m² and an average single fiber diameter of 10.1 µm.

Table 1 shows basic physical properties and characteristics of each non-woven fabric or layer.

**[Table 1]**

| | | CB | EMB1 | EMB2 | NF1 | NF2 | SB |
|---|---|---|---|---|---|---|---|
| Fiber resin | | PVA+PET | PP | PP | PVDF | PVDF | PP |
| Average fiber diameter | (µm) | 80.0 | 4.5 | 2.8 | 0.048 | 0.048 | 10.1 |
| Basis weight | (g/m²) | 40.0 | 18.0 | 20.0 | 0.4 | 0.6 | 15.0 |
| Initial collection efficiency Ian (0.3- to 0.5-µm particles) | (%) | 1.0 | 95.8 | 99.7 | 77.5 | 84.5 | 1.5 |
| Collection efficiency after static elimination IaDn (0.3- to 0.5-µm particles) | (%) | 0.8 | 15.9 | 30.7 | 66.5 | 78.1 | 1.3 |
| Initial pressure drop (0.3- to 0.5-pm particles) | (Pa) | 0.8 | 9.0 | 22.0 | 15.3 | 25.7 | 0.7 |
| Initial quality factor (QF) QFan (0.3- to 0.5-µm particles) | | 0.01 | 0.35 | 0.26 | 0.10 | 0.07 | 0.02 |
| Quality factor (QF) after static elimination QFaDn (0.3- to 0.5-µm particles) | | 0.01 | 0.02 | 0.02 | 0.07 | 0.06 | 0.02 |
| Quality factor (QF) after static elimination/initial quality factor (QF) QFan/QFaDn (0.3- to 0.5-µm particles) | | 0.80 | 0.05 | 0.06 | 0.73 | 0.81 | 0.87 |
| MPPS (0.015- to 0.3-µm particles) | (pm) | 0.06 | 0.02 | 0.02 | 0.08 | 0.08 | 0.07 |
| Air permeability | (cm³/cm²·sec) | 375.0 | - | - | - | - | - |

### [Example 1]

### (Three-layer filter medium configuration)

CB was used for the first layer, EMB2 was used for the second layer, and NF1 was used for the third layer. The layer corresponding to the fourth layer was not provided.

### (Lamination)

A laminate of the second layer and the third layer was obtained by using the second layer manufactured in advance as a base material at the time of manufacturing the third layer. To the surfaces of the first layer and the second layer of this laminate, a hot-melt resin made of polyethylene was dispersed so as to be 6.0 g/m², and the fiber layers were combined with each other to provide a three-layer filter medium.

### [Example 2]

### (Four-layer filter medium configuration)

CB was used for the first layer, EMB1 was used for the second layer, NF1 was used for the third layer, and SB was used for the fourth layer.

### (Lamination)

To the first layer and the second layer above, a hot-melt resin made of polyethylene was dispersed so as to be 6.0 g/m², and the fiber layers were combined with each other to provide a laminate of the first layer and the second layer. A laminate of the third layer and the fourth layer was obtained by using the fourth layer manufactured in advance as a base material at the time of manufacturing the third layer. To the surface of the second layer and the surface of the third layer of these two laminates, a hot-melt resin made of polyethylene was dispersed so as to be 6.0 g/m², and the fiber layers were combined with each other to provide a four-layer filter medium.

### [Example 3]

### (Four-layer filter medium configuration)

CB was used for the first layer, EMB1 was used for the second layer, NF2 was used for the third layer, and SB was used for the fourth layer.

### (Lamination)

With the above layer configuration, the fiber layers were combined in the same manner as in Example 2 to obtain a four-layer filter medium.

### [Example 4]

### (Four-layer filter medium configuration)

CB was used for the first layer, EMB2 was used for the second layer, NF1 was used for the third layer, and SB was used for the fourth layer.

### (Lamination)

With the above layer configuration, the fiber layers were combined in the same manner as in Example 2 to obtain a four-layer filter medium.

### [Example 5]

### (Four-layer filter medium configuration)

CB was used for the first layer, EMB2 was used for the second layer, NF2 was used for the third layer, and SB was used for the fourth layer.

### (Lamination)

With the above layer configuration, the fiber layers were combined in the same manner as in Example 2 to obtain a four-layer filter medium.

### [Example 6]

### (Four-layer filter medium configuration)

CB was used for the first layer, EMB2 was used for the second layer, NF2 was used for the third layer, and EMB2 was used for the fourth layer.

### (Lamination)

With the above layer configuration, the fiber layers were combined in the same manner as in Example 2 to obtain a four-layer filter medium.

### [Example 7]

### (Four-layer filter medium configuration)

SB was used for the first layer, EMB2 was used for the second layer, NF2 was used for the third layer, and SB was used for the fourth layer.

### (Lamination)

With the above layer configuration, the fiber layers were combined in the same manner as in Example 2 to obtain a four-layer filter medium.

### [Comparative Example 1]

### (Three-layer filter medium configuration)

CB was used for the first layer, EMB2 was used for the second layer, and SB was used for the fourth layer. The layer corresponding to the third layer was not provided.

### (Lamination)

To the first layer and the second layer above, a hot-melt resin made of polyethylene was dispersed so as to be 6.0 g/m², and the fiber layers were combined with each other to provide a laminate of the first layer and the second layer. To the surface of the second layer of this laminate and the surface of the fourth layer, a hot-melt resin made of polyethylene was dispersed so as to be 6.0 g/m², and the fiber layers were combined with each other to provide a three-layer filter medium.

### [Comparative Example 2]

### (Three-layer filter medium configuration)

EMB1 was used for the second layer, NF1 was used for the third layer, and SB was used for the fourth layer. The layer corresponding to the first layer was not provided.

### (Lamination)

A laminate of the third layer and the fourth layer was obtained by using the fourth layer manufactured in advance as a base material at the time of manufacturing the third layer. To the surfaces of the second layer and the third layer of this laminate, a hot-melt resin made of polyethylene was dispersed so as to be 6.0 g/m², and the fiber layers were combined with each other to provide a three-layer filter medium.

### [Comparative Example 3]

### (Three-layer filter medium configuration)

EMB1 was used for the second layer, NF2 was used for the third layer, and SB was used for the fourth layer. The layer corresponding to the first layer was not provided.

### (Lamination)

With the above layer configuration, the fiber layers were combined in the same manner as in Comparative Example 2 to obtain a three-layer filter medium.

### [Comparative Example 4]

### (Three-layer filter medium configuration)

CB was used for the first layer, NF1 was used for the third layer, and SB was used for the fourth layer. The layer corresponding to the second layer was not provided.

### (Lamination)

A laminate of the third layer and the fourth layer was obtained by using the fourth layer manufactured in advance as a base material at the time of manufacturing the third layer. To the surfaces of the first layer and the third layer of this laminate, a hot-melt resin made of polyethylene was dispersed so as to be 6.0 g/m², and the fiber layers were combined with each other to provide a three-layer filter medium.

### [Comparative Example 5]

### (Three-layer filter medium configuration)

CB was used for the first layer, NF2 was used for the third layer, and SB was used for the fourth layer. The layer corresponding to the second layer was not provided.

### (Laminating method)

With the above layer configuration, the fiber layers were combined in the same manner as in Comparative Example 4 to obtain a three-layer filter medium.

Tables 2 and 3 show the basic physical properties of the laminated filter media of Examples 1 to 7 and Comparative Examples 1 to 5, and Tables 4 and 5 show the dust collection and durability of the laminated filter media of Examples 1 to 7 and Comparative Examples 1 to 5.

**[Table 2]**

| | | Example 1 | Example 2 | Example 3 | Example 4 | Example 5 | Example 6 | Example 7 |
|---|---|---|---|---|---|---|---|---|
| First layer | | CB | CB | CB | CB | CB | CB | SB |
| Second layer | | EMB2 | EMB1 | EMB1 | EMB2 | EMB2 | EMB2 | EMB2 |
| Third layer | | NF1 | NF1 | NF2 | NF1 | HF2 | NF2 | NF2 |
| Fourth layer | | - | SB | SB | SB | SB | EMB2 | SB |
| Initial collection efficiency Ia (0.3- to 0.5-µm particles) | (%) | 98.5 | 99.1 | 99.4 | 99.9 | 100.0 | 100.0 | 100.0 |
| Collection efficiency after static elimination IaD (0.3- to 0.5-µm particles) | (%) | 49.0 | 83.0 | 88.5 | 84.4 | 89.3 | 92.6 | 89.4 |
| Initial collection efficiency of first layer/initial collection efficiency of second layer la1/la2 (0.3- to 0.5-µm particles) | | 0.01 | 0.01 | 0.01 | 0.01 | 0.01 | 0.01 | 0.01 |
| Initial collection efficiency of second layer/initial collection efficiency of third layer la2/la3 (0.3- to 0.5-µm particles) | | 1.29 | 1.24 | 1.13 | 1.29 | 1.18 | 1.18 | 1.18 |
| Initial pressure drop (0.3- to 0.5-µm particles) | (Pa) | 28.0 | 24.3 | 34.7 | 37.3 | 47.7 | 69.7 | 48.4 |
| Initial quality factor (QF) QFa (0.3- to 0.5-µm particles) | | 0.15 | 0.19 | 0.15 | 0.20 | 0.16 | 0.19 | 0.16 |
| Quality factor (QF) after static elimination QFaD (0.3- to 0.5-µm particles) | | 0.03 | 0.08 | 0.07 | 0.05 | 0.05 | 0.04 | 0.05 |
| Quality factor (QF) after static elimination/initial quality factor (QF) QFaD/Qfa (0.3- to 0.5-µm particles) | | 0.18 | 0.41 | 0.45 | 0.27 | 0.30 | 0.20 | 0.30 |
| Collection efficiency Ia (0.03-µm neutralized NaCl particles) | (%) | 94.2 | 89.1 | 91.7 | 94.2 | 93.3 | 99.8 | 93.3 |
| Collection efficiency IB (0.1-µm neutralized NaCl particles) | (%) | 96.1 | 94.7 | 95.3 | 96.1 | 96.6 | 99.9 | 96.6 |
| Collection efficiency IC (0.3-µm neutralized NaCl particles) | (%) | 99.1 | 98.8 | 99.0 | 99.1 | 99.1 | 99.9 | 99.1 |

**[Table 3]**

| | | Comparative Example 1 | Comparative Example 2 | Comparative Example 3 | Comparative Example 4 | Comparative Example 5 |
|---|---|---|---|---|---|---|
| First layer | | CB | - | - | CB | CB |
| Second layer | | EMB2 | EMB1 | EMB1 | - | - |
| Third layer | | - | NF1 | NF2 | NF1 | NF2 |
| Fourth layer | | SB | SB | SB | SB | SB |
| Initial collection efficiency Ia (0.3- to 0.5-µm particles) | (%) | 99.7 | 99.1 | 99.4 | 75.6 | 87.7 |
| Collection efficiency after static elimination IaD (0.3- to 0.5-µm particles) | (%) | 31.7 | 83.3 | 88.5 | 64.8 | 79.8 |
| Initial collection efficiency of first layer/initial collection efficiency of second layer la1/la2 (0.3- to 0.5-µm particles) | | 0.01 | - | - | - | - |
| Initial collection efficiency of second layer/initial collection efficiency of third layer la2/la3 (0.3- to 0.5-µm particles) | | - | 1.24 | 1.13 | - | - |
| Initial pressure drop (0.3- to 0.5-µm particles) | (Pa) | 22.7 | 24.3 | 34.7 | 17.3 | 27.3 |
| Initial quality factor (QF) QFa (0.3- to 0.5-µm particles) | | 0.26 | 0.19 | 0.15 | 0.08 | 0.08 |
| Quality factor (QF) after static elimination QFaD (0.3- to 0.5-µm particles) | | 0.02 | 0.08 | 0.07 | 0.06 | 0.06 |
| Quality factor (QF) after static elimination/initial quality factor (QF) QFaD/Qfa (0.3- to 0.5-µm particles) | | 0.07 | 0.41 | 0.45 | 0.79 | 0.82 |
| Collection efficiency IA (0.03-µm neutralized NaCl particles) | (%) | 90.9 | 89.1 | 91.7 | 68.1 | 75.6 |
| Collection efficiency IB (0.1-µm neutralized NaCl particles) | (%) | 98.8 | 94.7 | 95.3 | 57.3 | 66.3 |
| Collection efficiency IC (0.3-µm neutralized NaCl particles) | (%) | 99.7 | 98.8 | 99.0 | 70.6 | 80.5 |

**[Table 4]**

| | | Example 1 | Example 2 | Example 3 | Example 4 | Example 5 | Example 6 | Example 7 |
|---|---|---|---|---|---|---|---|---|
| First layer | | CB | CB | CB | CB | CB | CB | SB |
| Second layer | | EMB2 | EMB1 | EMB1 | EMB2 | EMB2 | EMB2 | EMB2 |
| Third layer | | NF1 | NF1 | NF2 | NF1 | NF2 | NF2 | NF2 |
| Fourth layer | | - | SB | SB | SB | SB | EMB2 | SB |
| Dust holding capacity | (g/m²) | 25.3 | 28.4 | 26.3 | 26.6 | 25.4 | 26.8 | 13.2 |
| Initial collection efficiency Ia (0.3- to 0.5-µm particles) | (%) | 98.5 | 99.1 | 99.4 | 99.9 | 100.0 | 100.0 | 100.0 |
| Initial pressure drop (0.3- to 0.5-µm particles) | (Pa) | 28.0 | 24.3 | 34.7 | 37.3 | 47.7 | 69.7 | 48.4 |
| Collection efficiency after cigarette smoke load of five cigarettes Ia' (0.3- to 0.5-µm particles) | (%) | 39.4 | 42.2 | 39.5 | 40.8 | 37.4 | 54.3 | 37.2 |
| Pressure drop after cigarette smoke load of five cigarettes (0.3- to 0.5-µm particles) | (Pa) | 73.1 | 64.5 | 84.0 | 82.4 | 95.8 | 119.4 | 94.3 |
| MPPS (0.015- to 0.300-µm particles) | (µm) | 0.03 | 0.03 | 0.03 | 0.03 | 0.03 | 0.04 | 0.03 |
| Pleatability | | A | A | A | A | A | A | B |

**[Table 5]**

| | | Comparative Example 1 | Comparative Example 2 | Comparative Example 3 | Comparative Example 4 | Comparative Example 5 |
|---|---|---|---|---|---|---|
| First layer | | CB | - | - | CB | CB |
| Second layer | | EMB2 | EMB1 | EMB1 | - | - |
| Third layer | | - | NF1 | NF2 | NF1 | NF2 |
| Fourth layer | | SB | SB | SB | SB | SB |
| Dust holding capacity | (g/m²) | 34.8 | 15.1 | 17.0 | 5.9 | 6.0 |
| Initial collection efficiency Ia (0.3- to 0.5-µm particles) | (%) | 99.7 | 99.1 | 99.4 | 75.6 | 87.7 |
| Initial pressure drop (0.3- to 0.5-µm particles) | (Pa) | 22.7 | 24.3 | 34.7 | 17.3 | 27.3 |
| Collection efficiency after cigarette smoke load of five cigarettes Ia' (0.3- to 0.5-µm particles) | (%) | 18.2 | 39.1 | 36.4 | 20.3 | 16.1 |
| Pressure drop after cigarette smoke load of five cigarettes (0.3- to 0.5-µm particles) | (Pa) | 21.8 | 47.5 | 91.2 | 48.8 | 74.3 |
| MPPS (0.015- to 0.300-µm particles) | (µm) | 0.02 | 0.03 | 0.03 | 0.08 | 0.08 |
| Pleatability | | A | C | C | A | A |

As shown in Table 2, in Examples 1 to 7, since the electret melt-blown non-woven fabric such as EMB1 and EMB2 was provided in the second layer, and the nanofiber layer such as NF1 and NF2 was provided in the third layer, it was found that the initial collection efficiency and the collection efficiency after static elimination exhibited high performance.

As shown in Table 2, in Examples 2 to 7, since the fourth layer was provided downstream of the third layer, the third layer that was easily damaged by contact with an external object was protected, and it was found that the collection efficiency after static elimination showed higher performance.

Furthermore, it was found that Examples 2 to 5 shown in Table 2 were excellent in processability because a chemical bond non-woven fabric such as CB was provided in the first layer, and exhibited high performance even in the initial pressure drop because a spunbond non-woven fabric such as SB was provided in the fourth layer.

On the other hand, as shown in Table 3, since the nanofiber layer of the third layer was not provided in Comparative Example 1, the electret melt-blown non-woven fabric of EMB2 of the second layer provided high initial collection efficiency and small pressure drop, but provided insufficient collection efficiency after static elimination.

As shown in Table 5, since Comparative Examples 2 and 3 were not provided with the first layer, the strength was low, and generally, the processability was poor and unsuitable for air filter applications in which assembling was performed after pleating to produce a product.

As shown in Table 3, in Comparative Examples 4 and 5, an electret melt-blown non-woven fabric such as EMB1 and EMB2 was not provided in the second layer, and thus the nanofiber layer of the third layer maintained high efficiency after static elimination, but the initial collection efficiency was insufficient.

In addition, as shown in Tables 4 and 5, it has been found that dust holding and cigarette smoke durability are higher when an electret melt-blown non-woven fabric layer such as EMB1 and EMB2 is provided on the upstream layer of the nanofiber, and still higher performance is exhibited when a reinforcing layer such as the chemical bond non-woven fabric of Synthesis Example 1 is provided on the upstream layer of the electret melt-blown non-woven fabric.

### INDUSTRIAL APPLICABILITY

The filter medium for an air filter of the present invention can be suitably used for air filter applications, particularly as filters for air purifiers and cabin filters for automobiles.

### DESCRIPTION OF REFERENCE SIGNS

- 1:: Sample holder
- 2:: Dust storage box
- 3:: Flow meter
- 4:: Flow adjusting valve
- 5:: Blower
- 6:: Particle counter
- 7:: Switching cock
- 8:: Pressure gauge
- 9:: Static eliminator
- M:: Measurement sample

## Claims

1. A filter medium for an air filter, comprising at least a first layer, a second layer, and a third layer in this order from an upstream side, wherein the second layer is an electret melt-blown non-woven fabric, the third layer is a nanofiber layer having an average fiber diameter of 10 to 1000 nm, and a basis weight of the third layer is 0.1 g/m² or more.

2. The filter medium for an air filter according to claim 1, wherein a constituent fiber of the electret melt-blown non-woven fabric of the second layer has an average fiber diameter of 0.5 to 50 µm.

3. The filter medium for an air filter according to claim 1 or 2, wherein a constituent fiber of the first layer has an average fiber diameter of 10 to 150 µm, and an initial collection efficiency Ian of an n-th layer measured using neutralized NaCl particles having a particle size of 0.3 to 0.5 µm at an air speed of 3.2 m/min satisfies relationships below: $Ia 1 < Ia 2$ $Ia 1 < Ia 3 .$

4. The filter medium for an air filter according to claim 1 or 2, wherein an initial collection efficiency Ian of an n-th layer measured using neutralized NaCl particles having a particle size of 0.3 to 0.5 µm at an air speed of 3.2 m/min satisfies relationships below: $Ia 1 / Ia 2 \leq 0.20$ $Ia 2 / Ia 3 \geq 1.00 .$

5. The filter medium for an air filter according to claim 1 or 2, wherein an initial quality factor (QF) QFan of an n-th layer measured using neutralized NaCl particles having a particle size of 0.3 to 0.5 µm at an air speed of 3.2 m/min and calculated from Formula (1) below satisfies relationships below: $QFa 1 / QFa 2 \leq 0.1$ $QFa 2 / QFa 3 \geq 1.0$ $QF = - Ln \left(1-I/100\right) / P$ (1) where in Formula (1), I represents a collection efficiency (%), and P represents a pressure drop (Pa).

6. The filter medium for an air filter according to claim 1 or 2, wherein an initial collection efficiency IA (%) measured using neutralized NaCl particles having a particle size of 0.03 µm at an air speed of 3.2 m/min, an initial collection efficiency IB (%) measured using neutralized NaCl particles having a particle size of 0.1 µm at an air speed of 3.2 m/min, and an initial collection efficiency IC (%) measured using neutralized NaCl particles having a particle size of 0.3 µm at an air speed of 3.2 m/min satisfy relationships below: $0.01 \leq \left(100-IB\right) / \left(100-IA\right) \leq 0.8$ $0.001 \leq \left(100-IC\right) / \left(100-IA\right) \leq 0.3 .$

7. The filter medium for an air filter according to claim 1 or 2, wherein an initial quality factor (QF) QFa of the filter medium for an air filter measured using neutralized NaCl particles having a particle size of 0.3 to 0.5 µm at an air speed of 3.2 m/min and calculated from Formula (1) below satisfies relationships below: $QFa \geq 0.07$ $QF = - Ln \left(1-I/100\right) / P$ (1) where in Formula (1), I represents a collection efficiency (%), and P represents a pressure drop (Pa).

8. The filter medium for an air filter according to claim 1 or 2, wherein an initial quality factor (QF) QFa3 of the third layer measured using neutralized NaCl particles having a particle size of 0.3 to 0.5 µm at an air speed of 3.2 m/min and calculated from Formula (1) below satisfies relationships below: $QFa 3 \geq 0.05$ $QF = - Ln \left(1-I/100\right) / P$ (1) where in Formula (1), I represents a collection efficiency (%), and P represents a pressure drop (Pa).

9. The filter medium for an air filter according to claim 1 or 2, wherein an initial quality factor (QF) QFa of the filter medium for an air filter, a quality factor (QF) QFaD2 after static elimination of the second layer, a quality factor (QF) QFaD3 after static elimination of the third layer, and a quality factor (QF) QFaDall after static elimination of the entire filter medium for an air filter measured using neutralized NaCl particles having a particle size of 0.3 to 0.5 µm at an air speed of 3.2 m/min and calculated from Formula (1) below satisfy relationships below: $QFaD 2 / QFa < 0.20$ $QFaD 3 / QFa > 0.20$ $0.10 \leq QFaDall / QFa \leq 1.00$ $QF = - Ln \left(1-I/100\right) / P$ (1) where in Formula (1), I represents a collection efficiency (%), and P represents a pressure drop (Pa).

10. The filter medium for an air filter according to claim 1 or 2, wherein a most penetrating particle size (MPPS) Mn (um) of a collection efficiency of an n-th layer measured using neutralized NaCl particles having a particle size of 0.015 to 0.300 µm at an air speed of 3.2 m/min satisfies relationships below: $M 2 < 0.05$ $M 3 > 0.05 .$

11. The filter medium for an air filter according to claim 1 or 2, comprising an adsorbent layer between the first layer and the second layer and/or between the second layer and the third layer.

12. The filter medium for an air filter according to claim 1 or 2, wherein the first layer has an air permeability of 100 to 600 cm³/cm²·sec.

13. The filter medium for an air filter according to claim 1 or 2, comprising a fourth layer formed of a fiber having an average fiber diameter of 0.5 to 150 µm on a downstream side of the third layer.

14. A manufacturing method for the filter medium for an air filter according to claim 1 or 2, the method comprising: bonding the first layer and the second layer; and then laminating the third layer on a surface on a second layer side to form the filter medium for an air filter including non-woven fabric layers of the first layer, the second layer, and the third layer.

15. A manufacturing method for the filter medium for an air filter according to claim 13, the method comprising: laminating the third layer on the fourth layer; bonding the first layer and the second layer; and then bonding a surface of the second layer and a surface of the third layer.

16. A manufacturing method for the filter medium for an air filter according to claim 13, the method comprising: bonding the first layer and the second layer; then laminating the third layer on a surface of the second layer; and laminating the fourth layer on a surface of the third layer.

17. An air filter unit comprising the filter medium for an air filter according to claim 1 or 2.
